# EUROPÄISCHE PATENTSCHRIFT

(11) **EP 1 834 132 B1**
(45) Veröffentlichungstag und Bekanntmachung des Hinweises auf die Patenterteilung: **20.06.2012**
(21) Anmeldenummer: 05816166.2
(22) Anmeldetag: 28.11.2005
(51) Int. Cl.: F23Q 7/00, G01L 23/08

(54) **GLÜHSTIFTKERZE MIT INTEGRIERTEM BRENNRAUMDRUCKSENSOR**
PENCIL-TYPE GLOW PLUG HAVING AN INTEGRATED COMBUSTION CHAMBER PRESSURE SENSOR
BOUGIE-CRAYON DE PRECHAUFFAGE A CAPTEUR DE PRESSION DE CHAMBRE DE COMBUSTION INTEGRE

(30) Priorität: 29.12.2004 DE 102004063750
(43) Veröffentlichungstag der Anmeldung: 19.09.2007
(73) Patentinhaber: ROBERT BOSCH GMBH, 70442 Stuttgart (DE)
(72) Erfinder: KERN, Christoph, 71546 Aspach (DE); SCHOTT, Steffen, 71701 Schwieberdingen (DE); LEDERMANN, Markus, 76149 Stuttgart (DE); SALTIKOV, Pavlo, 71334 Waiblingen (DE)
(86) Internationale Anmeldenummer: PCT/EP2005/056254
(87) Internationale Veröffentlichungsnummer: WO 2006/072510

(56) Entgegenhaltungen:
- EP-A- 1 134 385
- EP-A- 1 460 404
- EP-A- 1 517 086
- WO-A-83/01093
- DE-A1- 10 218 544
- DE-C- 656 168
- US-A1- 2003 091 458

## Beschreibung

### Technisches Gebiet

Die gesetzlichen Abgasvorschriften an die Schadstoffemission von selbstzündenden Verbrennungskraftmaschinen verschärfen sich ständig. Ferner besteht die Anforderung an neu entwickelte Motormanagementsysteme von Verbrennungskraftmaschinen, einen niedrigen Kraftstoffverbrauch zu gewährleisten sowie eine höhere Lebensdauer zu erreichen. Die Verbrennungsoptimierung im Brennraum einer selbstzündenden Verbrennungskraftmaschine wird durch den Einsatz einer Einspritzregelung des Kraftstoffs erreicht. Dazu wird bei einer Brennraumdrucksignal-basierten Motorregelung ein Drucksensor eingesetzt, der sehr hohen Anforderungen hinsichtlich der erreichbaren Zuverlässigkeit der Messgenauigkeit und hinsichtlich eines optimierten Bauraums genügen muss.

### Stand der Technik

Aus dem Kraftfahrtechnischen Taschenbuch, 23. Auflage, Braunschweig; Wiesbaden, Vieweg 1999, ISBN 3-528-03876-4, Seite 111 ist ein integrierter Silizium-Brennraumdrucksensor bekannt. Der Silizium-Brennraumdrucksensor umfasst einen Übertragungsstößel, ein Silizium-Podest, welches der Krafteinleitung dient sowie einen integrierten Silizium-Drucksensor. An einer Seite der Stahlmontageplatte befinden sich ein oder mehrere Anschlussstifte, von dem oder von denen aus eine Verbindungseinleitung zum integrierten Silizium-Drucksensor verläuft. Gemäß dieser Anordnung ist der Silizium-Chip den hohen Temperaturen in einem Brennraum einer Verbrennungskraftmaschine nicht unmittelbar ausgesetzt. Dies wird durch eine metallische Trennmembran sowie einen Stößel ausreichender Länge zur Kraftübertragung erreicht. Durch das mikromechanische Aufbringen eines Podestes in der Membranmitte wird der Silizium-Chip zu einem Kraftsensor. Die von der Frontmembran aufgenommenen Druckkräfte werden über den Stößel mit nur geringer zusätzlicher Verfälschung über das Podest in den Sensor-Chip aus Silizium eingeleitet.

Dieser befindet sich in einer zurückgezogenen Montageposition und ist somit nur noch Betriebstemperaturen unterhalb von 150 °C ausgesetzt.

WO 97/31251 A ist ein Brennraumdrucksensor zur Ermittlung von Klopferscheinungen und Zündaussetzern zu entnehmen. In eine Zündkerze ist ein faseroptischer Brennraumdrucksensor integriert. Dieser ist derart konfiguriert, dass der Zündkerzenkörper von einem Leiter durchzogen ist. Eine tastenförmig ausgebildete Membran mit einer ungleichmäßigen Dicke reduziert die auf die Membran wirkende mechanische Beanspruchung und steigert die Zuverlässigkeit des Sensors. Auftretende Überdrücke, die auf den Brennraumdrucksensor wirken, werden dadurch reduziert, dass an der Membran gewinkelte Abschnitte ausgebildet sind.

Aus WO 01/53556 A1 ist ein Federstahl des Maraging-Typs bekannt. Dabei handelt es sich um einen hochfesten, aushärtbaren korrosionsbeständigen Federstahl, der im Wesentlichen aus 6,0 bis 9,0 Gew.-% Ni, 11,0 bis 15,0 Gew.-% Cr, 0,1 bis 0,3 Gew.-% Ti, 0,2 bis 0,3 Gew.-% Be sowie Rest Fe besteht, dessen Martensit-Temperatur Mₛ ≥ 130 °C beträgt und der einen Ferritgehalt C_{Ferrit} < 3% aufweist. Bei diesem hochfesten aushärtbaren korrosionsbeständigen Federstahl können bis zu 50% des Nickelgehalts durch Kobalt ersetzt werden. Auch können bis zu 35% des Chromgehalts durch Molybdän und/oder Wolfram ersetzt werden.

EP 1 134 385 A beschreibt eine Glühstiftkerze für eine Verbrennungskraftmaschine mit einem Kerzenkörper in welchen ein Brennraumdrucksensor integriert ist.

Ein zur Zeit weit verbreiteter Messvorrichtungstyp zur Erfassung des Brennraumdrucks im Brennraum einer Verbrennungskraftmaschine ist der "Stand-alone"-Sensor, für dessen Einsatz eine separate Bohrung in der Zylinderkopfwand vorgesehen werden muss. In der Regel liegt der Preis für solche Sensoren recht hoch, was jedoch durch die erzielbare hohe Messgenauigkeit gerechtfertigt erscheint. Für die Serienanwendungen im automotiven Bereich sind jedoch nur vergleichsweise preiswerte Drucksensoren wirtschaftlich sinnvoll. Die Sensorintegration in bereits existierende Komponenten des Zylinderkopfs einer Verbrennungskraftmaschine bringt einen deutlichen Preisvorteil mit sich und ermöglicht damit erst den Großserieneinsatz. In Zylinderköpfen moderner Verbrennungskraftmaschinen sind keine zusätzlichen Bohrungen einzubringen, da die Platzverhältnisse, insbesondere bei 4-Ventil-Verbrennungskraftmaschinen äußerst beengt sind und der Verlauf von Kühlmittelkanälen fest vorgegeben ist, wodurch die Platzverhältnisse im Zylinderkopf einer Verbrennungskraftmaschine äußerst beengt sind.

### Darstellung der Erfindung

Erfindungsgemäß wird vorgeschlagen, den Druck in den Zylindern einer selbstzündenden Verbrennungskraftmaschine mittels einer Glühstiftkerze gemäß Anspruch 1 zu bestimmen.

Gemäß der vorgeschlagenen Lösung wird ein Sensor in eine bereits vorhandene Zylinderkopfkomponente, wie zum Beispiel eine Glühstiftkerze integriert. Die Abdichtung übernimmt gemäß dieser Lösung ein federelastisches Element in Gestalt einer Membran aus einem rostfreien ausscheidungsgehärteten Maraging-Stahl. Dieser weist im Vergleich zu anderen, bisher eingesetzten Werkstoffen eine hohe Festigkeit sowie eine höhere Biegewechselfestigkeit beziehungsweise Schwellfestigkeit auf, im Vergleich zu normalen und nicht rostenden Stählen. Ferner ist dem rostfreien, ausscheidungsgehärteten Maraging-Stahl eine erhöhte Dauerfestigkeit eigen, was die Lebensdauer der federelastisch ausgebildeten Membran positiv beeinflusst und ein Versagen der Abdichtung am Brennraum der Verbrennungskraftmaschine durch die in diesen hineinragende Glühstiftkerze über die Lebensdauer der Verbrennungskraftmaschine weitestgehend ausschließt.

Des weiteren zeichnet sich der vorgeschlagene Werkstoff durch eine hohe Alterungsbeständigkeit aus. Die hohe Alterungsbeständigkeit dieses Werkstoffs wird durch eine thermische beziehungsweise mechanische Voralterung (Vorplastifizierung) erreicht. Durch die thermische beziehungsweise mechanische Voralterung des rostfreien, ausscheidungsgehärteten Maraging-Stahls lässt sich ein geringer Spannungsabfall sowie ein äußerst günstiges, d.h. geringes Relaxationsverhalten erreichen. Aufgrund der ausgezeichnete isotropen Verformbarkeit des rostfreien, ausscheidungsgehärteten Maraging-Stahls lässt sich die federelastisch ausgebildete Membran mittels des Tiefziehverfahrens herstellen. Dieses Verfahren ermöglicht die Formung extrem dünnwandig ausgebildeter Bauteile, die nur minimale Biegeradien aufweisen. Der vorgeschlagenen, aus einem rostfreien, ausscheidungsgehärteten Maraging-Stahl gefertigten Membran sind darüber hinaus ein günstiges Hysteres-Verhalten sowie eine gute Hochtemperaturbeständigkeit eigen. Ferner zeichnet sich der rostfreie, ausscheidungsgehärtete Maraging-Stahl dadurch aus, dass dieser eine gute chemische Beständigkeit gegen aggressive Medien aufweist und insbesondere eine hervorragende Heißgaskorrosionsbeständigkeit aufweist, was insbesondere beim Einsatz an Verbrennungskraftmaschinen eine hohe Bedeutung hat. In fertigungstechnischer Hinsicht sind die rostfreien, ausscheidungsgehärteten Maraging-Stähle dadurch gekennzeichnet, dass sie eine gute Schweißbarkeit erlauben, was hinsichtlich der Herstellung der Abdichtung der Glühstiftkerze, die einen integrierten Brennraumdrucksensor aufweist, von erheblicher Bedeutung ist.

### Zeichnung

Anhand der Zeichnung wird die Erfindung nachstehend eingehender beschrieben.

Es zeigt:
- Figur 1: einen Längsschnitt durch die erfindungsgemäß vorgeschlagene Glühstiftkerze mit integriertem Brennraumdrucksensor und federelastischer Stahlmembran, und
- Figur 2: eine in vergrößertem Maßstab dargestellte Wiedergabe der Einspannstelle der Stahlmembran.

### Ausfuhrunesvarianten

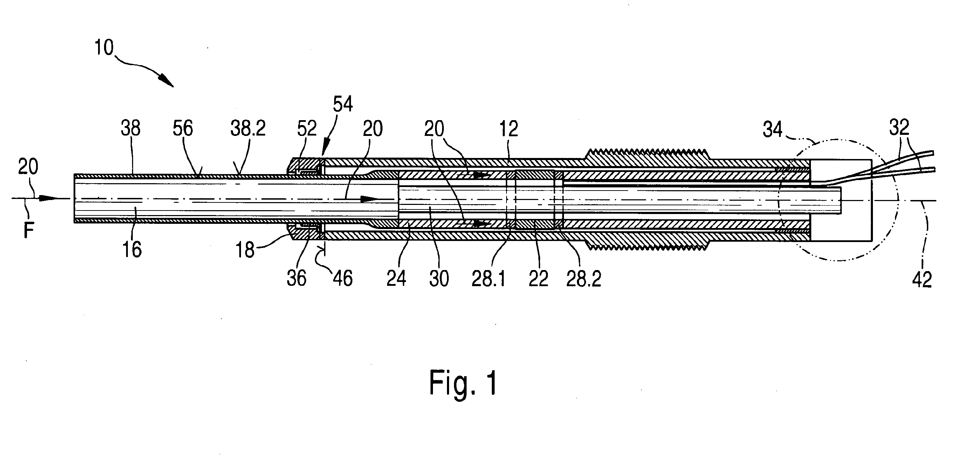

Figur 1 zeigt eine erfindungsgemäß vorgeschlagene Glühstiftkerze mit integriertem Brennraumdrucksensor in Schnittdarstellung.

Eine Glühstiftkerze 10 umfasst einen als Gehäuse dienenden Kerzenkörper 12. Der Kerzenkörper 12 ist im Wesentlichen rohrförmig ausgestaltet und umschließt einen keramischen Heizkörper 16, der stabförmig ausgebildet ist. Die Mantelfläche des keramischen Heizkörpers 16 ist mit Bezugszeichen 56 kenntlich gemacht. Der stabförmig ausgebildete keramische Heizkörper 16 ragt an einem Ende aus dem Kerzenkörper 12 heraus und ist über einen Dichtkonus 18 abgedichtet. Da zwischen dem keramischen oder metallischen Heizkörper 16 und dem Dichtkonus 18 ein Ringspalt vorgesehen ist, lässt sich der Heizkörper 16 nicht abdichten. Mittels des Dichtkonus' 18 ist gewährleistet, dass die Kompression im Brennraum der Verbrennungskraftmaschine nicht durch die Leckage der Brennraumgase im Bereich der Glühstiftkerzenbohrung verringert wird.

Der Dichtkonus 18 fixiert an einer Einspannstelle 54 eine Stahlmembran 36, die der Abdichtung der Glühstiftkerze 10 gegen die Brennraumgase darstellt. Der stabförmig ausgebildete keramische Heizkörper 16 ragt in den Brennraum einer selbstzündenden Verbrennungskraftmaschine hinein und wird an seiner Stirnseite durch die im Brennraum jeweils herrschenden Gase, d.h. den Gasdruck beaufschlagt. Dies ist in der Darstellung gemäß Figur 1 durch den mit dem mit F bezeichneten Pfeil angedeutet.

Der im Brennraum herrschende Gasdruck, der auf die Stirnseite des keramischen Heizkörpers 16 eine Druckkraft ausübt, wird gemäß eines Kraftpfades 20 durch das Material des keramischen Heizkörpers 16 an Kraftübertragungselemente 24 übertragen und von diesen an ein Kraftmesselement 22 weitergeleitet. Bei dem Kraftmesselement 22 kann es sich sowohl um ein piezoelektrisches Sensorelement als auch um ein Druckmesselement handeln.

Beidseits des durch die Kraftübertragungselemente 24 beaufschlagten Kraftmesselements 22 befinden sich Kontaktierungen, in der Ausführungsvariante gemäß Figur 1 handelt es sich dabei um eine erste Kontaktierung 28.1 sowie um eine zweite Kontaktierung 28.2. Das im Kraftpfad 20 liegende Kraftmesselement 22 ist vorzugsweise vorgespannt.

Handelt es sich bei dem Kraftmesselement 22 um ein piezoelektrisches Sensorelement, wird bei einer mechanischen Beanspruchung desselben durch die Ausübung eines Kraftimpulses auf den keramischen oder auch metallischen Heizkörper 16 eine Ladung und somit eine Spannung erzeugt, die von den Oberflächen des Kraftmesselements 22 anhand einer Metallisierung und/oder durch die dargestellten Kontaktierungen 28.1 beziehungsweise 29.2 abgegriffen wird. Vom Kraftmesselement 22 erstrecken sich Anschlussbahnen 30 durch das Innere des Kerzenkörpers 12 der Glühstiftkerze 10 zu einer Steckverbindung 34. An der Steckverbindung 34 sind Zuleitungen 32 anschließbar, mit welchen die elektrischen Signale einer Auswertung, wie zum Beispiel einem zentralen Motorsteuergerät einer Verbrennungskraftmaschine zugeleitet werden können.

Der keramische Heizkörper 16 ist von einem Stützrohr 38 umschlossen. Die Mantelfläche des Stützrohrs 38 ist durch Bezugszeichen 38.2 kenntlich gemacht. Die Hauptfunktion des Stützrohrs 38 ist die Befestigung des keramischen Heizkörpers 16, das heißt des Glühstiftes. Der keramische Heizkörper 16 wird in das Stützrohr 38 eingelötet. Anstelle eines keramischen Heizkörpers 16 kann auch ein Heizkörper 16 aus metallischem Material eingesetzt werden. Der keramische Heizkörper 16 und das Stützrohr 38 sind symmetrisch zur Symmetrieachse 42 ausgebildet. Die Stahlmembran 36 wird durch den Dichtkonus 18 an eine Stirnseite 46 des Kerzenkörpers 12 angestellt. Der Dichtkonus 18 begrenzt eine Ausnehmung 52, innerhalb der die in Figur 1 gebogen dargestellte Stahlmembran 36 aufgenommen ist.

Eine durch den Druck im Brennraum einer Verbrennungskraftmaschine ausgeübte Kraft F wirkt auf die in den Brennraum der Verbrennungskraftmaschine hineinragende Stirnseite des stabförmig ausgebildeten keramischen Heizkörpers 16. Die Druckeinwirkung verursacht eine linear-elastische Einfederung der sich innerhalb des Kraftpfades 20 befindlichen Bauteile im Bereich von µm. Dadurch lässt sich ein Kraftimpuls übertragen, der direkt mit dem Brennraumdruck korreliert. Aufgrund der Druckeinwirkung auf den stabförmig ausgebildeten keramischen Heizkörper 16 an seiner Stirnseite bewegt sich dieser relativ zum an der Einspannstelle 54 fixierten Stahlmembran 36. Die durch den Brennraumdruck hervorgerufene Druckwirkung auf den stabförmig ausgebildeten keramischen Heizkörpers 16 kann einerseits unmittelbar an das Kraftmesselement 22 übertragen werden sowie mittelbar über die in Figur 1 zwischen dem Kraftmesselement 22 und dem keramischen Heizkörper 16 ausgebildeten stabförmigen Kraftübertragungselemente 24.

Das als Druckaufnehmer dienende Kraftmesselement 22 ist innerhalb der Glühstiftkerze 10 hinter dem sich durch die Druckeinwirkung im Brennraum bewegenden keramischen Heizkörper 16 aufgenommen. Die Abdichtung gegen die Brennraumgase wird durch die Stahlmembran 36 erreicht, die aus nicht rostendem, ausscheidungsgehärteten Maraging-Stahl gefertigt ist.

Üblicherweise werden die bisher eingesetzten Druckaufnehmer für einen Einsatz an Verbrennungskraftmaschinen derart konstruiert, dass die Stirnseite einer Stahlmembran direkt der Flammenfront im Brennraum ausgesetzt ist. Moderne Herstellungsverfahren erlauben die Fertigung der Stahlmembran 36 in unterschiedlichen Geometrien und in unterschiedlichen Abmessungen. Die Vorteile der eingesetzten Stahlmembran 36 aus einem nicht rostenden Stahl im Vergleich zu anderen bisher eingesetzten Dichtungen sind zum Beispiel die hohe Temperaturbeständigkeit der Stahlmembran 36 von Tiefstemperaturen bis zu einer Temperatur von + 450 °C sowie deren hohe chemische Beständigkeit gegen fast alle Medien. Hinzu treten hervorragende mechanische Eigenschaften über den gesamten Temperaturbereich sowie eine ausgezeichnete Alterungsbeständigkeit. Sogar bei hohen Prozesstemperaturen können durch die Verwendung einer entsprechenden Stahlsorte ausreichende Standzeiten erreicht werden.

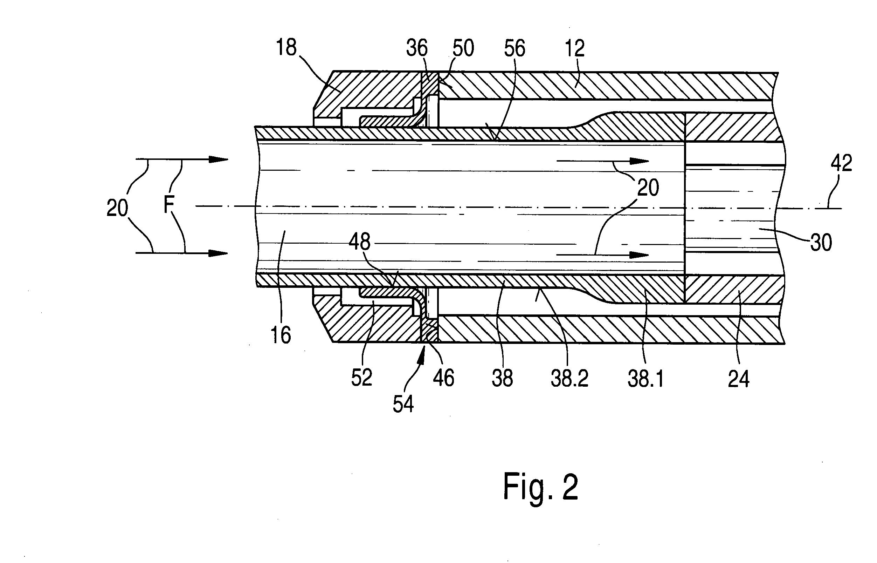

Der Darstellung gemäß Figur 2 ist die die Abdichtung übernehmende Stahlmembran an ihrer Einspannstelle in vergrößertem Maßstab zu entnehmen.

In Figur 2 ist dargestellt, dass die Stahlmembran 36 zwischen der Stirnseite 46 des Kerzenkörper 12 und einer Stirnseite des Dichtkonus 18 an der Einspannstelle 54 eingespannt ist. Die Stahlmembran 36 liegt mit einer ersten Anlagefläche 48 an der Mantelfläche 56 des sich relativ zur Stahlmembran bei Druckbeaufschlagung axial bewegenden keramischen Heizkörpers 16 an und mit einer zweiten Anlagefläche 50 der Stirnseite 46 des Kerzenkörpers 12 gegenüber. Die Axialbewegung des stabförmig ausgebildeten keramischen Heizkörpers 16 erfolgt durch die durch Pfeile dargestellte Kraft F, die durch den im Brennraum herrschenden, zu ermittelnden Druck auf den in den Brennraum der Verbrennungskraftmaschine hineinragenden keramischen Heizkörper 16 ausgeübt wird Der Kraftpfad ist auch in Figur 2 durch das Bezugszeichen 20 angedeutet. In der Darstellung gemäß Figur 2 ist hinter dem keramischen Heizkörper 16 ein Anschlussbolzen 30 angeordnet, der als Glühstromschiene dient. Die Sensorleitungen, mit denen das elektrische Signal vom Sensor abgegriffen wird, sollen vom Glühstrom isoliert werden. Daher ist ein Kontakt eines Kontaktblättchens oder dergleichen des Kraftübertragungselementes 22 mit der Glühstromschiene beziehungsweise mit dem keramischen Heizkörper 16 nicht erlaubt. Die in Figur 2 dargestellten, sich in einem Kragen 38.1 des Stützrohrs 38 abstützenden Kraftübertragungselementes 24 werden aus einem isolierenden Werkstoff hergestellt, wie zum Beispiel Isolationskeramik. Für den Fall, dass das Kraftübertragungselement 22 unmittelbar hinter dem keramischen oder metallischen Heizkörper 16 angeordnet werden soll, kann an Stelle eines keramisch ausgebildeten Kraftübertragungselementes 24 zumindest eine Isolationsscheibe eingesetzt werden. Der am Stützrohr 38 ausgebildete Kragen 38.1 dient zur Kraftübertragung auf das Kraftmesselement 22 durch die Kraftübertragungselemente 24.

Die Stahlmembran 36 weist ausgezeichnete federnde Eigenschaften auf. Die Stahlmembran 36 kann zum Beispiel an der ersten Anlagefläche 48 auf dem Umfang ihres Innendurchmessers, zum Beispiel mit dem Stützrohr 38, in welchem der keramische Heizkörper 16 geführt ist, verbunden werden. Handelt es sich bei dem Heizkörper 16 hingegen um einen aus metallischem Material, ist eine direkte Verbindung der Stahlmembran 36 mit der Mantelfläche einer solchen Art beschaffenen Heizkörpers 16 möglich. Alternativ ist es auch möglich, die Stahlmembran 36 mit einem zum Beispiel aus Stahl gefertigten Stützrohr 38 zu verbinden.

Eine weitere Fixierungsmöglichkeit der Stahlmembran 36 kann zwischen der Stirnseite 46 des Kerzenkörpers 12 und der zweiten Anlagefläche 50 der Stahlmembran 36 ausgeführt werden. Daneben besteht auch die Möglichkeit, die Stahlmembran 36 mit dem Dichtkonus 18 oder mit dem Kerzenkörper 12 zum Beispiel stoffschlüssig im Wege des Laserschweißens herzustellen.

Der erfindungsgemäß vorgeschlagenen Lösung folgend, wird eine Stahlmembran 36 in einer Glühstiftkerze 10 mit integriertem Brennraumdrucksensor eingesetzt, wobei die Stahlmembran 36 aus einem hochfesten, korrosionsbeständigen ausscheidungsgehärteten Maraging-Stahl gefertigt wird. Dieser Stahl weist einen Chromgehalt zwischen 11,0 Gew.-% bis 15,0 Gew.-%, einen Nickelgehalt von 6,0 Gew.-% bis 9,0 Gew.-%, einen Titangehalt zwischen 0,1 Gew.-% bis 0,3 Gew.-% sowie einen Berylliumgehalt von 0,2 Gew.-% bis 0,3 Gew.-% auf, der Rest ist Eisen. Die Martensittemperatur M_{S} liegt bei ≥ 130 °C, wobei der Ferritgehalt C_{Ferrit} < 3% liegt. Dieser Stahl ist im lösungsgeglühten Zustand eine vollständig martensitische Legierung und weist ein dementsprechendes Kristallgefüge auf, welches eine gute isotrope Umformbarkeit erlaubt. Der lösungsgeglühte Zustand ist durch die Ausscheidung von intermetallischen Phasen innerhalb einer Metallmatrix charakterisiert. Dieser Zustand stellt sich materialspezifisch ein.

Dieses Material kann durch eine Wärmebehandlung ausgehärtet werden. Durch das Aushärten dieser Stähle werden sehr hohe Festigkeiten, hohe Biegewechselfestigkeiten und Relaxationsbeständigkeiten bis 300 °C erreicht. Nach einer entsprechenden Wärmebehandlung können Vickers-Härten HV > 590 und sehr hohe Festigkeiten (> 1900 MPa) erreicht werden. 50 Gew.-% des Nickelgehalts können durch Beigabe von Kobalt ersetzt werden, ferner lassen sich bis zu 35 Gew.-% des Chromgehalts durch Beigabe von Molybdän und/oder Wolfram ersetzen. Des weiteren kann dieser Stahl bis zu 4 Gew.-% Kupfer enthalten, wodurch sich die bereits ausgezeichnete Korrosionsbeständigkeit noch weiter steigern lässt. Darüber hinaus lässt sich eine aus diesem Stahl gefertigte Stahlmembran 36 an der Einspannstelle 54 gemäß der Darstellung in Figur 2 sehr gut verschweißen, wobei eine stoffschlüssige, durch Schweißen hergestellte Verbindung einerseits an der Stirnseite 46 des Kerzenkörpers 12 ausgebildet werden kann und andererseits eine stoffschlüssige Verbindung zwischen der Stahlmembran 36 und dem Dichtkonus 18 hergestellt werden kann. Eine gute Schweißbarkeit stellt ein erhebliches Kriterium hinsichtlich einer einfachen Montage der Stahlmembran 36 in der Fertigung dar.

Das Stahlmaterial der Stahlmembran 36 weist eine Zugfestigkeit Rₘ > 2000 MPa sowie eine Streckgrenze von R_{p0,2} > 1900 MPa sowie eine Biegewechselfestigkeit R_{Bw} > 900 MPa sowie eine Schwellfestigkeit R_{S} > 1500 MPa auf. So kann die Stahlmembran 36 zum Beispiel im Wege des Tiefziehens oder anderer Fertigungsverfahren in ihre in Figur 1 dargestellte Geometrie überführt werden, wobei nach dem Umformen die hervorragenden federelastischen Eigenschaften des Materials der Stahlmembran 36 erhalten bleiben. Selbstverständlich sind neben der in Figur 1 dargestellten Konfiguration der Stahlmembrane 36 auch andere nicht dargestellte Geometrien möglich. Nach dem Umformen der Stahlmembran 36 kann diese durch eine definierte Wärmebehandlung zudem noch spezifisch ausgehärtet werden. Das eingesetzte Material für die Stahlmembran zeichnet sich durch seine hervorragende Biegewechselfestigkeit aus. Es gibt Stähle, die höhere Festigkeiten aufweisen als das vorzugsweise für die Stahlmembran 36 eingesetzte Material (Maraging-Stahl), allerdings ist deren maximaler Lastwechselzahl bei zyklischer Wechselbelastung sehr begrenzt. Neben den erwähnten Tiefziehen kann die Stahlmembran 36 auch durch Spanabhebefertigungsverfahren hergestellt werden.

Das Stahlmaterial ist darüber hinaus sehr resistent gegenüber aggressiven Medien, wie sie zum Beispiel die Brennraumgase einer Verbrennungskraftmaschine darstellen. Darüber hinaus ist festzuhalten, dass das Material auch höchsten Temperaturen dauerhaft standhält, so dass die Abdichtung der Glühstiftkerze 10, in welche der Brennraumdrucksensor mit den Komponenten stabförmig ausgebildeter Heizkörper 11 sowie ein- oder beidseitig kontaktiertes Kraftmesselement 22 und gegebenenfalls die sich durch den Kerzenkörper 12 erstreckenden Kraftübertragungselemente 24 dauerhaft gegen die Brennraumgase abgedichtet sind, was die Lebensdauer der erfindungsgemäß vorgeschlagenen Glühstiftkerze 10 erheblich verlängert.

Das Material, aus welchem die Stahlmembran 36 vorzugsweise gefertigt wird, zeichnet sich durch eine sehr gute Umformbarkeit aus. Im Allgemeinen besitzen martensitische Stähle sehr hohe Härten und sind daher sehr schlecht umformbar. Das vorliegende Material, aus welchem die Stahlmembran 36 vorzugsweise gefertigt wird, stellt zwar eine martensitische Legierung dar, lässt sich jedoch sehr gut umformen. Der Werkstoff, aus dem die Stahlmembran 36 vorzugsweise hergestellt wird, ist der erwähnte Maraging-Stahl mit der weiter oben erwähnten Zusammensetzung. Dieser weist eine Zugfestigkeit Rₘ > 2000 MPa, eine Streckgrenze R_{p0,2} > 1900 MPa sowie eine Vickers-Härte HV > 600 auf.

### Bezugszeichenliste

- 10: Glühstiftkerze
- 12: Kerzenkörper
- 16: keramischer Heizkörper (Stabform)
- 18: Dichtkonus
- 20: Kraftpfad
- 22: Kraftmesselement
- 24: Kraftübertragungselement
- 28.1: erste Kontaktierung
- 28.2: zweite Kontaktierung
- 30: Anschlussbolzen
- 32: Zuleitungen
- 34: Steckverbindung
- 36: Stahlmembran
- 38: Stützrohr
- 38.1: Stützrohrkragen
- 38.2: Mantelfläche Stützrohr
- 42: Symmetrieachse
- 46: Stirnseite Kerzenkörper
- 48: erste Anlagefläche Stahlmembran 36
- 50: zweite Anlagefläche Stahlmembran 36
- 52: Hohlraum
- 54: Einspannstelle Stahlmembran 36
- 56: Mantelfläche Heizkörper 16

## Patentansprüche

1. Glühstiftkerze (10) für eine selbstzündenden Verbrennungskraftmaschine mit einem Kerzenkörper (12), in welchen ein Brennraumdrucksensor (22) integriert ist, mit einem stabförmig ausgebildeten Heizkörper (16), welcher an einem Ende aus dem Kerzenkörper (12) heraus- und in einen Brennraum der Verbrennungskraftmaschine hineinragen kann, und ein Kraftmesselement (22) des Brennraumdrucksensors (22) hinter dem sich bei Druckeinwirkung axial bewegbaren Heizkörper (16) aufgenommen ist, **dadurch gekennzeichnet, dass** das Kraftmesselement (22) durch eine Stahlmembran (36) aus nicht rostendem, ausscheidungsgehärtetem Maraging-Stahl gegen Brennraumgase abgedichtet ist, wobei die Stahlmembran (36) aus einem Stahl mit nachfolgender Zusammensetzung gefertigt ist:
- 11,0 Gew.-% bis 15,0 Gew.-% Cr,
- 6,0 Gew.-% bis 9,0 Gew.-% Ni,- 0,1 Gew.-% bis 0,3 Gew.-% Ti,
- 0,1 Gew.-% bis 0,3 Gew.-% Be,
- 0,5 Gew.-% bis 1,5 Gew.-% Mo,
- Rest Eisen, und
die Stahlmembran (36) am brennraumseitigen Ende des Kerzenkörpers (12) zwischen einem Dichtkonus (18) und dem Kerzenkörper (12) aufgenommen ist, und die Stahlmembran (36) am Umfang ihres Innendurchmessers mit einer Mantelfläche (56) des stabförmigen Heizkörpers (16) an einer ersten Anlagefläche (48) verbunden ist, wobei die Anlagefläche (48) auf einer Seite der Stahlmembran (36) ausgebildet ist, die mit dem Kerzenkörper (12) in Kontakt steht.

2. Glühstiftkerze (10) gemäß Anspruch 1, **dadurch gekennzeichnet, dass** die Stahlmembran (36) an ihrer Einspannstelle (54) entweder mit dem Kerzenkörper (12) oder mit dem stabförmig ausgebildeten Heizkörper (16) verbunden ist.

3. Glühstiftkerze (10) gemäß Anspruch 2, **dadurch gekennzeichnet, dass** die Stahlmembran (36) mit einer Stirnseite (46) des Kerzenkörpers (12) oder einer Stirnseite eines Dichtkonus' (18) stoffschlüssig verbunden ist.

4. Glühstiftkerze (10) gemäß Anspruch 1, **dadurch gekennzeichnet, dass** der Stahl der Stahlmembran (36) bis zu 4 Gew.-% Cu enthält.

5. Glühstiftkerze (10) gemäß Anspruch 1, **dadurch gekennzeichnet, dass** der stabförmig ausgebildete Heizkörper (16) in einem Stützrohr (38) befestigt ist.

## Claims

1. Pencil-type glow plug (10) for a compression-ignition internal combustion engine, having a plug body (12) in which a combustion chamber pressure sensor (22) is integrated, having a bar-shaped heating body (16), which can project at one end out of the plug body (12) and into a combustion chamber of the internal combustion engine, and a force-measuring element (22) of the combustion chamber pressure sensor (22) is accommodated behind the heating body (16), which is axially movable under the action of pressure, **characterized in that** the force-measuring element (22) is sealed off from combustion chamber gases by a steel membrane (36) made of stainless, precipitation-hardened maraging steel, wherein the steel membrane (36) is produced from a steel having the following composition:
- 11.0% by weight to 15.0% by weight Cr,
- 6.0% by weight to 9.0% by weight Ni,
- 0.1% by weight to 0.3% by weight Ti,
- 0.1% by weight to 0.3% by weight Be,
- 0.5% by weight to 1.5% by weight Mo,
- remainder iron, and
the steel membrane (36) is accommodated at the end of the plug body (12) at the combustion chamber side between a sealing cone (18) and the plug body (12), and the steel membrane (36) is connected at the circumference of the inner diameter thereof, at a first bearing surface (48), to a lateral surface (56) of the bar-shaped heating body (16), wherein the bearing surface (48) is formed on a side of the steel membrane (36) which is in contact with the plug body (12).

2. Pencil-type glow plug (10) according to Claim 1, **characterized in that** the steel membrane (36) is connected at the clamping point (54) thereof either to the plug body (12) or to the bar-shaped heating body (16).

3. Pencil-type glow plug (10) according to Claim 2, **characterized in that** the steel membrane (36) is integrally bonded to an end face (46) of the plug body (12) or an end face of a sealing cone (18).

4. Pencil-type glow plug (10) according to Claim 1, **characterized in that** the steel in the steel membrane (36) contains up to 4% by weight Cu.

5. Pencil-type glow plug (10) according to Claim 1, **characterized in that** the bar-shaped heating body (16) is fastened in a supporting tube (38).

## Revendications

1. Bougie crayon de préchauffage (10) pour moteur à combustion interne à auto-allumage, la bougie présentant :
un corps de bougie (12) dans lequel est intégré un détecteur (22) de la pression qui règne dans la chambre de combustion,
un corps de chauffe (16) configuré en forme de barreau et dont une extrémité peut déborder hors du corps de bougie (12) dans une chambre de combustion du moteur à combustion interne et
un élément (22) de mesure de force du détecteur (22) de la pression qui règne dans la chambre de combustion, en aval duquel le corps de chauffe (16) mobile axialement est repris en cas d'action d'une pression,
**caractérisée en ce que**
l'élément (22) de mesure de force est séparé hermétiquement des gaz de la chambre de combustion par une membrane (36) en acier à trempe martensitique secondaire, inoxydable et durci par précipitation, la membrane (36) étant réalisée en un acier qui présente la composition suivante :
- 11,0 % en poids à 15,0 % en poids de Cr,
- 6,0 % en poids à 9,0 % en poids de Ni,
- 0,1 % en poids à 0,3 % en poids de Ti,
- 0,1 % en poids à 0,3 % en poids de Be,
- 0,5 en poids à 1,5 % en poids de Mo,
- le reste étant du fer,
la membrane (36) en acier étant reprise entre un cône d'étanchéité (18) et le corps de bougie (12) à l'extrémité du corps de bougie (12) situé du côté de la chambre de combustion,
la membrane (36) en acier étant reliée à une première surface de pose (48) à la périphérie de son diamètre intérieur par une surface d'enveloppe (56) du corps de chauffe (16) en forme de barreau,
la surface de pose (48) étant formée sur le côté de la membrane (36) en acier qui est en contact avec le corps (12) de la bougie.

2. Bougie crayon de préchauffage (10) selon la revendication 1, **caractérisée en ce que** la membrane (36) en acier est reliée en son emplacement de serrage (54) au corps de bougie (12) ou au corps de chauffe (16) configuré en barreau.

3. Bougie crayon de préchauffage (10) selon la revendication 2, **caractérisée en ce que** la membrane (36) en acier est reliée en correspondance de matière à un côté frontal (46) du corps de bougie (12) ou à un côté frontal d'un cône d'étanchéité (18).

4. Bougie crayon de préchauffage (10) selon la revendication 1, **caractérisée en ce que** l'acier de la membrane (36) en acier contient jusque 4 % en poids de Cu.

5. Bougie crayon de préchauffage (10) selon la revendication 1, **caractérisée en ce que** le corps de chauffe (16) en forme de barreau est fixé sur un tube de soutien (38).
